# EUROPEAN PATENT APPLICATION

(11) **EP 4 712 384 A1**
(43) Date of publication of application: **18.03.2026**
(21) Application number: 23935968.0
(22) Date of filing: 06.05.2023
(51) Int. Cl.: H04L 5/00

(54) **COMMUNICATION METHOD, APPARATUS AND DEVICE, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2023/092621
(87) International publication number: WO 2024/229639

(57) **Abstract**

The present disclosure relates to a communication method, apparatus and device, and a storage medium. The method comprises: receiving first information, the first information being used for determining that a channel measurement resource (CMR) comprises N non-zero power channel state information reference signal (NZP CSI-RS) resources, and N being a positive integer; and when N is greater than 1, determining whether a terminal selects and feeds back M NZP CSI-RS resources from amongst the N NZP CSI-RS resources, M being less than or equal to N. Thus, by means of the first information, it is determined whether to select and feed back M NZP CSI-RS resources from amongst the N NZP CSI-RS resources, thereby improving the feasibility of communication based on coherent joint transmission.

## Description

### TECHNICAL FIELD

The present disclosure relates to the technical field of communication, and in particular, to a communication method, apparatus, device and storage medium.

### BACKGROUND

Currently, a solution based on coherent joint transmission (CJT) for the physical downlink shared channel (PDSCH) is being discussed. For the same terminal, up to four transmission and receiving points (TRPs) can be supported to provide services for the terminal at the same time.

### SUMMARY

In order to overcome the problems existing in the related art, the present disclosure provides a communication method, apparatus, device and storage medium.

According to the first aspect of embodiments of the present disclosure, a communication method is provided, which is performed by a terminal, and includes: receiving first information, where the first information is used to determine that a channel measurement resource (CMR) includes N non-zero power channel state information reference signal (NZP CSI-RS) resource(s), where N is a positive integer; in a case that N is greater than 1, determining whether the terminal selects and feeds back M NZP CSI-RS resource(s) from the N NZP CSI-RS resource(s), where M is less than or equal to N.

In some implementations, the first information is further used to determine at least one first beam number combination, where individual beam numbers in the first beam number combination are associated with one NZP CSI-RS resource, respectively.

In some implementations, the first information is further used to determine at least one first parameter combination, where the first parameter combination includes a frequency domain basis vector combination parameter *P*ᵥ and a non-zero coefficient parameter β.

In some implementations, in a case that a combination of a second beam number combination and *P*ᵥ , β is not supported, it is determined that the terminal does not select or feed back M NZP CSI-RS resource(s) from N NZP CSI-RS resource(s), where the second beam number combination is a subset of the first beam number combination.

In some implementations, a situation where the combination of the second beam number combination and *P*ᵥ and β is not supported includes at least one of: a specification stipulates that the combination of the second beam number combination and *P*ᵥ and β is not supported; the terminal does not support the combination of the second beam number combination and *P*ᵥ and β; the terminal supports the combination of the second beam number combination and *P*ᵥ and β, and the terminal does not support dynamic switching between a designated scheme and a single transmission and receiving point (S-TRP) communication scheme, where the designated scheme adopts multiple transmission and receiving point (M-TRP) communication, and the second beam number combination includes one beam number.

In some implementations, in a case that a combination of a third beam number combination and *P*ᵥ and β is supported, it is determined that the terminal selects and feeds back M NZP CSI-RS resource(s) from the N NZP CSI-RS resource(s), where the third beam number combination is a subset of the first beam number combination.

In some implementations, a situation where the combination of the third beam number combination and *P*ᵥ and β is supported includes at least one of: a combination of the third beam number combination and *P*ᵥ and β supported by a specification; and a combination of the third beam number combination and *P*ᵥ and β supported by the terminal.

In some implementations, the designated scheme is coherent joint transmission (CJT).

In some implementations, the CJT includes at least one of: one CMR configured by a network device including L NZP CSI-RS resource(s), where L is a positive integer, and one NZP CSI-RS resource corresponds to one TRP or one TRP group; independently feeding back a spatial domain basis vector for each of multiple NZP CSI-RS resources; independently feeding back a frequency domain basis vector for each of the multiple NZP CSI-RS resources; and feeding back a same frequency domain basis vector for each of the multiple NZP CSI-RS resources.

In some implementations, the first information is used to instruct the terminal not to select or feed back M NZP CSI-RS resource(s) from N NZP CSI-RS resource(s); or, the first information is used to instruct the terminal to select and feed back M NZP CSI-RS resource(s) from the N NZP CSI-RS resource(s).

In some implementations, the method further includes: sending second information; where the second information includes at least one of: whether the terminal supports a capability of dynamically switching between a designated scheme and an S-TRP communication scheme; a combination of a second beam number combination and *P*ᵥ and β that is not supported by the terminal; a combination of a third beam number combination and *P*ᵥ and β that is supported by the terminal.

According to the second aspect of the embodiments of the present disclosure, a communication method is provided, which is performed by a network device, and includes: sending first information, where the first information is used to determine that a channel measurement resource (CMR) includes N non-zero power channel state information reference signal (NZP CSI-RS) resource(s), where N is a positive integer.

In some implementations, the first information is further used to determine at least one first beam number combination, where individual beam numbers in the first beam number combination are associated with one NZP CSI-RS resource, respectively.

In some implementations, the first information is further used to determine at least one first parameter combination, where the first parameter combination includes a frequency domain basis vector combination parameter *P*ᵥ and a non-zero coefficient parameter β.

In some implementations, the first information is used to instruct the terminal not to select or feed back M NZP CSI-RS resource(s) from N NZP CSI-RS resource(s); or, the first information is used to instruct the terminal to select and feed back M NZP CSI-RS resource(s) from the N NZP CSI-RS resource(s).

In some implementations, the method further includes: receiving second information; where the second information includes at least one of: whether the terminal supports a capability of dynamically switching between a designated scheme and an S-TRP communication scheme; a combination of a second beam number combination and *P*ᵥ and β that is not supported by the terminal; a combination of a third beam number combination and *P*ᵥ and β that is supported by the terminal.

In some implementations, a situation where the combination of the second beam number combination and *P*ᵥ and β is not supported by the terminal includes at least one of: a specification stipulates that the combination of the second beam number combination and *P*ᵥ and β is not supported; the terminal does not support the combination of the second beam number combination and *P*ᵥ and β; the terminal supports the combination of the second beam number combination and *P*ᵥ and β, and the terminal does not support dynamic switching between the designated scheme and the single transmission and receiving point (S-TRP) communication scheme, where the designated scheme adopts multiple transmission and receiving point (M-TRP) communication, and the second beam number combination includes one beam number.

In some implementations, a situation where the combination of the third beam number combination and *P*ᵥ and β is supported by the terminal includes at least one of: a combination of the third beam number combination and *P*ᵥ and β supported by a specification; and a combination of the third beam number combination and *P*ᵥ and β supported by the terminal.

In some implementations, the designated scheme is coherent joint transmission (CJT).

In some implementations, the CJT includes at least one of: one CMR configured by the network device including L NZP CSI-RS resource(s), where L is a positive integer and one NZP CSI-RS resource corresponds to one TRP or one TRP group; independently feeding back a spatial domain basis vector for each of multiple NZP CSI-RS resources; independently feeding back a frequency domain basis vector for each of the multiple NZP CSI-RS resources; and feeding back a same frequency domain basis vector for each of the multiple NZP CSI-RS resources.

According to the third aspect of the embodiments of the present disclosure, a communication apparatus is provided, including: a receiving module, configured to receive first information, where the first information is used to determine that a CMR includes N NZP CSI-RS resource(s), where N is a positive integer; and a processing module, configured to determine whether the terminal selects and feeds back M NZP CSI-RS resource(s) from the N NZP CSI-RS resource(s) in a case that N is greater than 1, where M is less than or equal to N.

In some implementations, the first information is further used to determine at least one first beam number combination, where individual beam numbers in the first beam number combination are associated with one NZP CSI-RS resource, respectively.

In some implementations, the first information is further used to determine at least one first parameter combination, where the first parameter combination includes a frequency domain basis vector combination parameter *P*ᵥ and a non-zero coefficient parameter β.

In some implementations, the processing module is further configured to: in a case that a combination of a second beam number combination and *P*ᵥ and β is not supported, determine that the terminal does not select or feed back M NZP CSI-RS resource(s) from the N NZP CSI-RS resource(s), where the second beam number combination is a subset of the first beam number combination.

In some implementations, a situation where the combination of the second beam number combination and *P*ᵥ and β is not supported includes at least one of: a specification stipulates that the combination of the second beam number combination and *P*ᵥ and β is not supported; the terminal does not support the combination of the second beam number combination and *P*ᵥ and β; the terminal supports the combination of the second beam number combination and *P*ᵥ and β, and the terminal does not support dynamic switching between a designated scheme and a single transmission and receiving point (S-TRP) communication scheme, where the designated scheme adopts multiple transmission and receiving point (M-TRP) communication, and the second beam number combination includes one beam number.

In some implementations, the processing module is further configured to: in a case that a combination of a third beam number combination and *P*ᵥ and β is supported, determine that the terminal selects and feeds back M NZP CSI-RS resource(s) from N NZP CSI-RS resource(s), where the third beam number combination is a subset of the first beam number combination.

In some implementations, a situation where the combination of the third beam number combination and *P*ᵥ and β is supported includes at least one of: the combination of the third beam number combination and *P*ᵥ and β supported by a specification; and the combination of the third beam number combination and *P*ᵥ and β supported by the terminal.

In some implementations, the designated scheme is coherent joint transmission (CJT).

In some implementations, the CJT includes at least one of: one CMR configured by a network device including L NZP CSI-RS resource(s), where L is a positive integer, and one NZP CSI-RS resource corresponds to one TRP or one TRP group; independently feeding back a spatial domain basis vector for each of multiple NZP CSI-RS resources; independently feeding back a frequency domain basis vector for each of the multiple NZP CSI-RS resources; and feeding back a same frequency domain basis vector for each of the multiple NZP CSI-RS resources.

In some implementations, the first information is used to instruct the terminal not to select or feed back M NZP CSI-RS resource(s) from N NZP CSI-RS resource(s); or, the first information is used to instruct the terminal to select and feed back M NZP CSI-RS resource(s) from N NZP CSI-RS resource(s).

In some implementations, the apparatus further includes: a sending module, configured to send second information; where the second information includes at least one of: whether the terminal supports a capability of dynamically switching between a designated scheme and an S-TRP communication scheme; a combination of a second beam number combination and *P*ᵥ and β that is not supported by the terminal; a combination of a third beam number combination and *P*ᵥ and β that is supported by the terminal.

According to the fourth aspect of the embodiments of the present disclosure, a communication apparatus is provided, the apparatus including: a sending module, configured to send first information, where the first information is used to determine that a CMR includes N NZP CSI-RS resource(s), where N is a positive integer.

In some implementations, the first information is further used to determine at least one first beam number combination, where individual beam numbers in the first beam number combination are associated with one NZP CSI-RS resource, respectively.

In some implementations, the first information is further used to determine at least one first parameter combination, where the first parameter combination includes a frequency domain basis vector combination parameter *P*ᵥ and a non-zero coefficient parameter β.

In some implementations, the first information is used to instruct the terminal not to select or feed back M NZP CSI-RS resource(s) from N NZP CSI-RS resource(s); or, the first information is used to instruct the terminal to select and feed back M NZP CSI-RS resource(s) from the N NZP CSI-RS resource(s).

In some implementations, the apparatus further includes: a receiving module, configured to receive second information; where the second information includes at least one of: whether the terminal supports a capability of dynamically switching between a designated scheme and an S-TRP communication scheme; a combination of a second beam number combination and *P*ᵥ and β that is not supported by the terminal; a combination of a third beam number combination and *P*ᵥ and β that is supported by the terminal.

In some implementations, a situation where the combination of the second beam number combination and *P*ᵥ and β is supported by the terminal includes at least one of: a specification stipulates that the combination of the second beam number combination and *P*ᵥ and β is not supported; the terminal does not support the combination of the second beam number combination and *P*ᵥ and β; the terminal supports the combination of the second beam number combination and *P*ᵥ and β, and the terminal does not support dynamic switching between the designated scheme and the single transmission and receiving point (S-TRP) communication scheme, where the designated scheme adopts multiple transmission and receiving point (M-TRP) communication, and the second beam number combination includes one beam number.

In some implementations, a situation where the combination of the third beam number combination and *P*ᵥ and β is supported by the terminal includes at least one of: the combination of the third beam number combination and *P*ᵥ and β supported by a specification; and the combination of the third beam number combination and *P*ᵥ and β supported by the terminal.

In some implementations, the designated scheme is coherent joint transmission (CJT).

In some implementations, the CJT includes at least one of: one CMR configured by the network device including L NZP CSI-RS resource(s), where L is a positive integer, and one NZP CSI-RS resource corresponds to one TRP or one TRP group; independently feeding back a spatial domain basis vector for each of multiple NZP CSI-RS resources; independently feeding back a frequency domain basis vector for each of the multiple NZP CSI-RS resources; and feeding back a same frequency domain basis vector for each of the multiple NZP CSI-RS resources.

According to the fifth aspect of the embodiments of the present disclosure, a communication device is provided, including: a processor; and a memory for storing instructions executable by the processor; where the processor is configured to: execute the first aspect and any one of the methods in the first aspect.

According to the sixth aspect of the embodiments of the present disclosure, a communication device is provided, including: a processor; and a memory for storing instructions executable by the processor; where the processor is configured to: execute the second aspect and any one of the methods in the second aspect.

According to the seventh aspect of the embodiments of the present disclosure, a non-transitory computer-readable storage medium is provided. When instructions in the storage medium are executed by a processor of a terminal, the terminal is enabled to perform the first aspect and any one of the methods in the first aspect.

According to the eighth aspect of the embodiments of the present disclosure, a non- transitory computer-readable storage medium is provided. When instructions in the storage medium are executed by a processor of a network device, the network device is enabled to perform the second aspect and any one of the methods in the second aspect.

The technical solutions provided by the embodiments of the present disclosure may include the following beneficial effects: it is determined whether to select and feed back M NZP CSI-RS resource(s) from N NZP CSI-RS resource(s) through the first information, thereby improving the feasibility of CJT-based communication.

It is to be understood that the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a schematic diagram of a wireless communication system according to an exemplary embodiment.
FIG. 2 is a flowchart of a communication method according to an exemplary embodiment.
FIG. 3 is a flowchart of another communication method according to an exemplary embodiment.
FIG. 4 is a flowchart of yet another communication method according to an exemplary embodiment.
FIG. 5 is a flowchart of yet another communication method according to an exemplary embodiment.
FIG. 6 is a schematic diagram of a communication apparatus according to an exemplary embodiment.
FIG. 7 is a schematic diagram showing another communication apparatus according to an exemplary embodiment.
FIG. 8 is a schematic diagram of a communication device according to an exemplary embodiment.
FIG. 9 is a schematic diagram of another communication device according to an exemplary embodiment.

### DETAILED DESCRIPTION

Here, exemplary embodiments will be described in detail, examples of which are shown in the accompanying drawings. When the following description refers to the drawings, unless otherwise indicated, the same numbers in different drawings represent the same or similar elements. The implementations described in the following exemplary embodiments do not represent all implementations consistent with the present disclosure.

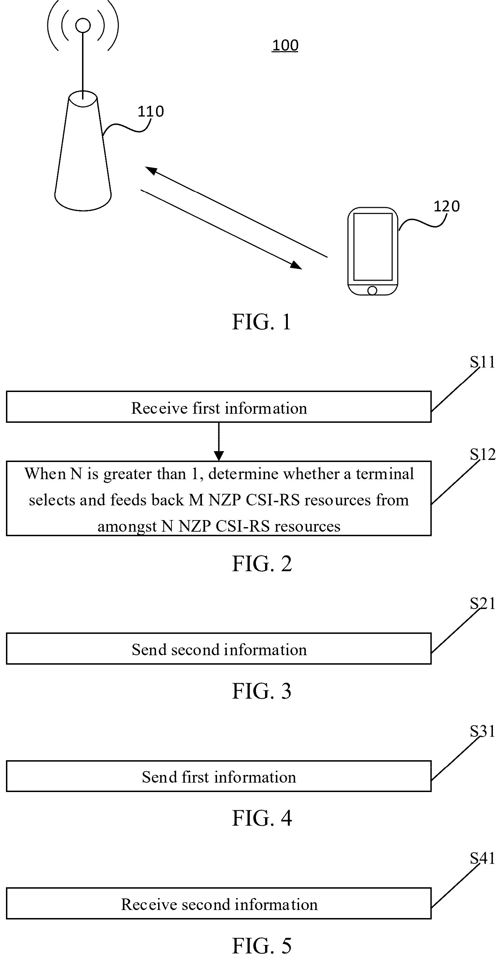

The communication method involved in the present disclosure can be applied to the wireless communication system 100 shown in FIG. 1. The network system may include a network device 110 and a terminal 120. It can be understood that the wireless communication system shown in FIG. 1 is only for schematic illustration, and the wireless communication system may also include other network devices, for example, a core network device, a wireless relay device, and a wireless backhaul device, which are not shown in FIG. 1. The embodiment of the present disclosure does not limit the number of the network devices and the number of the terminals included in the wireless communication system.

It can be further understood that the wireless communication system of the embodiments of the present disclosure is a network that provides the wireless communication function. The wireless communication system can adopt different communication technologies, such as a code division multiple access (CDMA), a wideband code division multiple access (WCDMA), a time division multiple access (TDMA), a frequency division multiple access (FDMA), an orthogonal frequency-division multiple access (OFDMA), a single carrier-frequency division multiple access (SC-FDMA), and a carrier sense multiple access with collision avoidance. According to the capacity, rate, delay and other factors of different networks, the network can be divided into 2G (English: generation) network, 3G network, 4G network or future evolution network, such as the 5th generation wireless communication system (5G) network, and the 5G network can also be referred to as NR. For the convenience of description, the present disclosure sometimes simply refers to the wireless communication network as the network.

Furthermore, the network device 110 involved in the present disclosure may also be referred to as a wireless access network device. The wireless access network device may be: a base station, an evolved node B (eNB), a home base station, an access point (AP) in a wireless fidelity (WIFI) system, a wireless relay node, a wireless backhaul node, a transmission point (TP) or a TRP, etc. It may also be a gNB in an NR system, or it may also be a component or a part of a device constituting a base station, etc. When it is a vehicle-to-everything (V2X) communication system, the network device may also be a vehicle-mounted device. It should be understood that in the embodiments of the present disclosure, the specific technology and specific device form adopted by the network device are not limited.

Furthermore, the terminal 120 involved in the present disclosure may also be referred to as a terminal device, user equipment (UE), mobile station (MS), mobile terminal (MT), etc., which is a device that provides voice and/or data connectivity to users. For example, the terminal may be a handheld device with wireless connection function, a vehicle-mounted device, etc. At present, some examples of terminals are: a smart phone (mobile phone), a pocket personal computer (PPC), a handheld computer, a personal digital assistant (PDA), a laptop computer, a tablet computer, a wearable device, or a vehicle-mounted device, etc. In addition, when it is a vehicle-to-everything (V2X) communication system, the terminal device may also be a vehicle-mounted device. It should be understood that the embodiments of the present disclosure do not limit the specific technology and specific device form adopted by the terminal.

In the embodiments of the present disclosure, the network device 110 and the terminal 120 may use any feasible wireless communication technology to achieve mutual data transmission. The transmission channel corresponding to sending data by the network device 110 to the terminal 120 is called a downlink channel (DL), and the transmission channel corresponding to sending data by the terminal 120 to the network device 110 is called an uplink channel (UL). It can be understood that the network device involved in the embodiments of the present disclosure may be a base station. The network device may also be any other possible network device, and the terminal may be any possible terminal, which is not limited by the present disclosure.

Currently, a CJT-based solution for PDSCH is under discussion. For the same terminal, up to 4 TRPs can be supported to provide services to the terminal at the same time. The specific number of TRPs used to perform communication of PDSCH and/or demodulation reference signal (DMRS) corresponding to PDSCH for the terminal can be determined by the network device or the terminal.

The determination manner of the network device is as follows.

The network device configures one channel measurement resource (CMR) for the terminal. If one CMR only includes one non-zero power channel state information reference signal (NZP CSI-RS) resource, since one NZP CSI-RS resource corresponds to one TRP or one TRP group, then communication of PDSCH and/or DMRS corresponding to PDSCH is performed for the terminal based on one TRP or one TRP group. The terminal does not need to select the NZP CSI-RS resource. The terminal can directly feed back channel state information (CSI) for the NZP CSI-RS resource, for example, including space domain basis (SD basis) selection indication, frequency domain basis (FD basis) selection indication, non-zero coefficient reporting, rank reporting, etc.

The network device configures one CMR for the terminal. If one CMR includes K NZP CSI-RS resources, where K is a positive integer greater than 1, and the network device indicates that the terminal does not need to select from the K NZP CSI-RS resources, then the terminal can directly provide CSI feedback for the K NZP CSI-RS resources. The network device communicates with the terminal on PDSCH and/or DMRS corresponding to PDSCH based on the K NZP CSI-RS resources.

The determination manner of the terminal is as follows.

The network device configures one CMR for the terminal. If one CMR includes K NZP CSI-RS resources, and the network device does not indicate that the terminal does not need to select from the K NZP CSI-RS resources, then the terminal can select X NZP CSI-RS resource(s) from the K NZP CSI-RS resources, where X is less than or equal to K. The terminal can also inform the network device which X NZP CSI-RS resource(s) is selected, for example, using Y bits. Each NZP CSI-RS resource corresponds to 1 bit. In one embodiment, a bit value of 1 indicates that the NZP CSI-RS resource corresponding to this bit is selected, and a bit value of 0 indicates that the NZP CSI-RS resource corresponding to this bit is not selected. In other embodiments, a bit value of 0 indicates that the NZP CSI-RS resource corresponding to this bit is selected, and a bit value of 1 indicates that the NZP CSI-RS resource corresponding to this bit is not selected. The bit value can also be any other value to indicate that the NZP CSI-RS resource corresponding to this bit is selected and/or the NZP CSI-RS resource corresponding to this bit is not selected, which is not limited in the present disclosure. In this case, the terminal reports the feedback CSI for the X NZP CSI-RS resources.

However, there is no consensus on how the terminal selects the NZP CSI-RS resource(s) for feedback CSI.

Therefore, the present disclosure provides a communication method, apparatus, device and storage medium, which determine whether to select and feed back M NZP CSI-RS resource(s) from N NZP CSI-RS resources through first information, thereby improving the feasibility of CJT-based communication.

FIG. 2 is a flowchart of a communication method according to an exemplary embodiment. As shown in FIG. 2, the method is performed by a terminal and may include the following steps.

In step S11, first information is received.

In some embodiments, a terminal receives first information. The first information may be used to determine that a CMR includes N NZP CSI-RS resource(s), where N is a positive integer.

For example, the terminal receives first information sent by the network device. The first information is used to determine that the CMR includes 1 NZP CSI-RS resource.

For another example, the terminal receives first information sent by the network device. The first information is used to determine that the CMR includes multiple NZP CSI-RS resources.

In step S12, in the case that N is greater than 1, it is determined whether the terminal selects and feeds back M NZP CSI-RS resource(s) from the N NZP CSI-RS resources.

In some embodiments, in the case that N is greater than 1, the terminal may determine whether the terminal selects and feeds back M NZP CSI-RS resource(s) from N NZP CSI-RS resources, where M is less than or equal to N.

It can be understood that the case where N is greater than 1 means that the CMR includes multiple NZP CSI-RS resources.

For example, in the case where multiple NZP CSI-RS resources are included in the CMR, the terminal can determine whether the terminal selects and feeds back M NZP CSI-RS resource(s) from N NZP CSI-RS resources based on the first information.

For example, the first information indicates whether the terminal selects and feeds back M NZP CSI-RS resource(s) from N NZP CSI-RS resources.

For another example, in the case that the terminal receives the first information, it determines whether to select and feed back M NZP CSI-RS resource(s) from N NZP CSI-RS resources based on a preset rule. It can be understood that the preset rule predefines whether the terminal selects and feeds back M NZP CSI-RS resource(s) from N NZP CSI-RS resources.

The present disclosure determines whether to select and feed back M NZP CSI-RS resource(s) from N NZP CSI-RS resources through the first information, thereby improving the feasibility of CJT-based communication.

In the communication method provided by the embodiments of the present disclosure, the first information is further used to determine at least one first beam number combination, where individual beam numbers in the first beam number combination are respectively associated with one NZP CSI-RS resource.

In some embodiments, the first information may also be used to determine at least one first beam number combination. It may be understood that the beam number combination may be an SD basis number combination. The first beam number combination includes one or more beam numbers. Each beam number in the first beam number combination may be associated with one NZP CSI-RS resource, respectively.

For example, each beam number in the first beam number combination may be associated with one NZP CSI-RS resource among the N NZP CSI-RS resources. Different beam numbers are associated with different NZP CSI-RS resources. It is clear that this is because one NZP CSI-RS resource is associated with one TRP or one TRP group, and each beam number in the beam number combination corresponds to one TRP or one TRP group. Therefore, different beam numbers are associated with different NZP CSI-RS resources.

In some embodiments, a combination configuration table of the beam number combination and the first parameter combination is provided, as shown in Table 1.

**Table 1**

| N_{TRP} | Beam number combination | Frequency domain basis vector combination parameter {*P*ᵥ}, non-zero coefficient parameter β | | | | | |
|---|---|---|---|---|---|---|---|
| | | {1/8,1/8, 1/16,1/16 }, ¼ | {1/8,1/8, 1/16,1/16 }, ½ | {1/4,1/4, 1/8,1/8}, ¼ | {1/4,1/4, 1/8,1/8}, ½ | 1/4, 1/4, 1/4, 1/4}, ¾ | {1/2,1 /2,1/2, 1/2}, ½ |
| 1 | 2 | | | x | x | | |
| | 4 | | | x | x | x | |
| | 6 w/ restriction | | | | x | x | |
| 2 | {2,2} | x | | | | | |
| | {2,4} | x | | | | | |
| | {4,2} | | | | | | |
| | {4,4} | | x | | x | | x |
| 3 | {2,2,2} | x | x | | | | |
| | {2,2,4} | x | x | | | | |
| | {2,4,2} | | | | | | |
| | {4,2,2} | | | | | | |
| | {4,4,4} | x | x | x | x | x | x |
| 4 | {2,2,2,2} | x | | | | | N/A |
| | {2,2,2,4} | x | | | | | N/A |
| | {2,2,4,4} | | | | x | x | N/A |
| | {4,4,4,4} | | x | | x | x | N/A |

Among them, "w/restriction" means that the maximum supported rank is 2. "N/A" can be understood as not applicable.

For example, N_{TRP} in the first column of Table 1 refers to the number of NZP CSI-RS resources included in one CMR configured by the network device, that is, the number of TRPs configured by the network device. The second column in Table 1 expresses the beam number combination. It can be understood that the beam number combination in the second column includes the first beam number combination. It can be seen that when N_{TRP} is different, the corresponding beam number combination is also different. For example, when N_{TRP} is 1, each beam number combination only needs to include the beam number corresponding to one TRP. The beam number can be the beam number of the target beam determined from more beams. Assume that the beam number is A, and the total number of beam numbers is N1*N2, then the beam number A is the beam number of the target beam selected from N1*N2. N1 represents the number of ports in the first dimension, and N2 represents the number of ports in the second dimension. It can be understood that the total number of beam numbers can also be configured by the network device, which is not limited by the present disclosure. In the case that N_{TRP} is greater than 1, the number of beam numbers included in each beam number combination is the same as the number of TRPs. That is, each beam number corresponds to one TRP, and it can also be considered that each beam number corresponds to one NZP CSI-RS resource in one CMR.

It can be understood that "x" in Table 1 indicates that the corresponding combination is a combination supported by the specification. For example, when the number of TRPs is 1 and the beam number combination of one TRP is 2, { *P*ᵥ } can only be {1/4, 1/4, 1/8, 1/8}, and β may be 1/2 or 1/4.

It may be understood that each element in Table 1 exists independently. These elements are exemplarily listed in the same table, but it does not mean that all elements in the table must exist at the same time as shown in the table. The value of each element is independent of the value of any other element in Table 1. Therefore, those skilled in the art can understand that the value of each element in Table 1 is an independent embodiment.

The first information in the present disclosure can also determine the beam number combination, so as to determine through the first information whether to select and feed back M NZP CSI-RS resource(s) from N NZP CSI-RS resources, thereby improving the feasibility of CJT-based communication.

In the communication method provided by the embodiments of the present disclosure, the first information is also used to determine at least one first parameter combination, where the first parameter combination includes a frequency domain basis vector combination parameter *P*ᵥ and a non-zero coefficient parameter β.

In some embodiments, the first information may also be used to determine at least one first parameter combination, where the first parameter combination includes a frequency domain basis vector combination parameter *P*ᵥ and a non-zero coefficient parameter β.

The at least one first parameter combination may correspond to the first beam number combination.

For example, as shown in the second row of Table 1, the frequency domain basis vector combination parameter *P*ᵥ may include 4 values, i.e., 4 *P*ᵥ . This means that the maximum rank is 4. In the case that the rank is 4, there are 4 layers, where each layer corresponds to one *P*ᵥ *. P*ᵥ on different layers is used to determine the number of frequency domain basis vectors that need to be selected on the corresponding layer. The number of frequency domain basis vectors that need to be selected can be determined by multiplying the total number of frequency domain basis vectors by *P*ᵥ*.*

For another example, a larger β means more non-zero coefficients. The terminal needs to report the specific value of each non-zero coefficient, so the signaling overhead is greater. In this case, the network device can obtain more information, so the performance of PDSCH and/or DMRS corresponding to PDSCH for communication can also be improved.

The first information in the present disclosure can also determine a first parameter combination, so as to determine whether to select and feed back M NZP CSI-RS resource(s) from N NZP CSI-RS resources through the first information, thereby improving the feasibility of CJT-based communication.

In the communication method provided by the embodiments of the present disclosure, in the case that the combination of the second beam number combination and *P*ᵥ, β is not supported, it is determined that the terminal does not select or feed back M NZP CSI-RS resource(s) from N NZP CSI-RS resources, where the second beam number combination is a subset of the first beam number combination.

In some embodiments, in the case that the combination of the second beam number combination and *P*ᵥ, β is not supported, the terminal may determine not to select or feed back M NZP CSI-RS resource(s) from N NZP CSI-RS resources. The second beam number combination is a subset of the first beam number combination.

For example, in the case that the combination of the second beam number combination and *P*ᵥ, β is not supported, the terminal may determine not to select or feed back M NZP CSI-RS resource(s) from N NZP CSI-RS resources based on the first information. The second beam number combination is a subset of the first beam number combination.

For example, the second beam number combination is one or more beam combinations corresponding to M NZP CSI-RS resource(s).

For example, in the case that the combination of the second beam number combination and *P*ᵥ and β is not supported, the terminal may determine not to select M NZP CSI-RS resource(s) from N NZP CSI-RS resources based on the first information. It can be understood that in this example, since the terminal does not select M NZP CSI-RS resource(s), the terminal does not feed back M NZP CSI-RS resource(s).

For another example, in the case that the combination of the second beam number combination and *P*ᵥ and β is not supported, the terminal may determine not to feed back M NZP CSI-RS resource(s) from the N NZP CSI-RS resources based on the first information. It can be understood that in this example, the terminal may select M NZP CSI-RS resource(s) but not feed back the M NZP CSI-RS resource(s). Alternatively, the terminal may not select M NZP CSI-RS resource(s), and therefore does not feed back M NZP CSI-RS resource(s).

It can be understood that in the above examples, the terminal does not feed back M NZP CSI-RS resource(s), so the network device will not perform communication of PDSCH and/or DMRS corresponding to PDSCH based on M NZP CSI-RS resource(s). The network device may perform communication of PDSCH and/or DMRS corresponding to PDSCH based on N NZP CSI-RS resources. This situation can also be considered that the terminal does not select M NZP CSI-RS resource(s).

The present disclosure provides a situation where the terminal does not select or feed back M NZP CSI-RS resource(s) from N NZP CSI-RS resources, thereby improving the feasibility of CJT-based communication.

In the communication method provided by the embodiments of the present disclosure, the situation where the combination of the second beam number combination and *P*ᵥ, β is not supported includes at least one of the following: the specification stipulates that the combination of the second beam number combination and *P*ᵥ, β is not supported; the terminal does not support the combination of the second beam number combination and *P*ᵥ, β; the terminal supports the combination of the second beam number combination and *P*ᵥ, β, and the terminal does not support dynamic switching between a designated scheme and a single (S) TRP communication scheme, where the designated scheme adopts multiple (M) TRP communication, and the second beam number combination includes one beam number.

In some embodiments, the situation where the combination of the second beam number combination and *P*ᵥ, β is not supported includes: the specification specifies that the combination of the second beam number combination and *P*ᵥ, β is not supported.

For example, the specification may pre-set that the combination of the second beam number combination and *P*ᵥ, β is not supported. Then the terminal will not be able to select CSI feedback for the unsupported combination. Accordingly, the terminal cannot select the NZP CSI-RS resource corresponding to the second beam number combination.

Still taking Table 1 as an example, the combinations not marked with "x" in Table 1 can be considered as combinations not supported by the specification. For the terminal, there is no need to select such combinations for CSI feedback. For the combinations marked with "x" in Table 1, if the combinations of the second beam number combination configured by the network device and *P*ᵥ and β are "{2,2}, {1/8,1/8,1/16,1/16}, 1/4", "{2,4}, {1/8,1/8,1/16,1/16}, 1/4", "{4,2}, {1/8,1/8,1/16,1/16}, 1/4", "{4,4}, {1/8,1/8,1/16,1/16}, 1/2", "{4,4}, {1/2,1/2,1/2,1/2}, 1/2", in these cases, the terminal does not need to select the NZP CSI-RS resources.

It can be understood that the reason why the combination of the second beam number combination and *P*ᵥ and β mentioned above does not need to be selected is that if the terminal selects the NZP CSI-RS resources, it is equivalent to selecting 1 TRP, however, in the above combination, in the case that the first parameter combination is the same, the beam number combination corresponding to 1 TRP is not supported by the specification. Therefore, the terminal does not need to select the NZP CSI-RS resources.

In the case where the above-mentioned terminal does not need to select the NZP CSI-RS resources, the network device may configure the terminal through certain information so that the terminal does not need to select. Alternatively, the terminal may determine that the terminal does not need to select based on a predetermined rule, which is not limited in the present disclosure.

In some embodiments, the situation where the combination of the second beam number combination and *P*ᵥ, β is not supported includes: the terminal does not support the combination of the second beam number combination and *P*ᵥ, β.

For example, the terminal may determine by itself that the combination of the second beam number combination and *P*ᵥ, β is not supported. For example, the terminal determines that the combination of the second beam number combination and *P*ᵥ*,* β is not supported by the terminal based on any possible situation such as its own measurement result, the situation of the terminal's own hardware support, the situation of the operator support, etc. Then the terminal will not be able to select to perform CSI feedback for the unsupported combination. Accordingly, the terminal cannot select the NZP CSI-RS resource corresponding to the second beam number combination.

For example, the terminal may send information indicating a combination of the second beam number combination and *P*ᵥ, β not supported by the terminal, to inform the network device. For another example, the terminal may also send information indicating a combination of the second beam number and P , β supported by the terminal, to inform the network device, thereby implicitly indicating the combination that the terminal does not support.

Still taking Table 1 as an example, among the combinations marked with "x" in Table 1, the terminal can set any one or more combinations as combination(s) that the terminal does not support. For the terminal, there is no need to select such combination(s) for CSI feedback. It can be assumed that the combination of the second beam number combination and *P*ᵥ, β is "{2}, {1/4,1/4,1/8,1/8}, 1/4", and "{4}, {1/4,1/4,1/8,1/8}, 1/4" is a combination that the terminal does not support. Then when the network device configures the terminal with a TRP number of 3, and the combination of the second beam number combination and *P*ᵥ, β is "{4,4,4}, {1/4,1/4,1/8,1/8}, 1/4", the terminal cannot select the NZP CSI-RS resource. The reason is that the specification does not support the combination with a TRP number of 2 under the same first parameter combination, and when the TRP number is 1, the terminal does not support the combination under the same first parameter combination. Therefore, the terminal does not need to select the NZP CSI-RS resource.

In the case where the terminal does not need to select the NZP CSI-RS resource, the network device may configure the terminal through certain information so that the terminal does not need to select. Alternatively, the terminal may determine that the terminal does not need to select based on a predetermined rule, which is not limited in the present disclosure.

In some embodiments, the situation where the combination of the second beam number combination and *P*ᵥ, β is not supported includes: the terminal supports the combination of the second beam number combination and *P*ᵥ, β, and the terminal does not support dynamic switching between the designated scheme and the S-TRP communication scheme. The designated scheme adopts M-TRP communication, and the second beam number combination includes one beam number.

For example, the terminal may support the combination of the second beam number combination and *P*ᵥ, β. However, the terminal does not support dynamic switching between the designated scheme and the S-TRP communication scheme. The second beam number combination includes one beam number. Then the terminal can not select to select the supported combination of the second beam number combination and *P*ᵥ*,* β.

Still taking Table 1 as an example, it can be assumed that the combination of the second beam number combination and *P*ᵥ, β is "{2}, {1/4,1/4,1/8,1/8}, 1/4", and "{4}, {1/4,1/4,1/8,1/8}, 1/4" is the combination supported by the terminal. At the same time, the terminal also supports the combination of the second beam number combination and *P*ᵥ, β "{4,4,4}, {1/4,1/4,1/8,1/8}, 1/4". However, the terminal does not support dynamic switching between the designated scheme and the S-TRP communication scheme. Then when the network device configures a designated scheme for the terminal, such as CJT, and the network device configures the number of TRPs as 3, and the combination of the second beam number combination and *P*ᵥ, β is "{4,4,4}, {1/4,1/4,1/8,1/8}, 1/4", the terminal cannot select one NZP CSI-RS resource from the 3 NZP CSI-RS resources. The terminal can only perform CSI feedback based on the 3 NZP CSI-RS resources, as well as communication of PDSCH and/or DMRS corresponding to the PDSCH.

It should be noted that in this case, the network device can still directly configure the combination when the TRP number is 1, that is, directly configure the combination of the second beam number combination and *P*ᵥ and β to be the combinations "{2}, {1/4,1/4,1/8,1/8}, 1/4", "{4}, {1/4,1/4,1/8,1/8}, 1/4". It can be understood that for the combinations of "{4,4}, {1/4,1/4,1/8,1/8}, 1/2", "{4,4,4}, {1/4,1/4,1/8,1/8}, 1/2", "{4,4,4}, {1/4,1/4,1/4,1/4}, 3/4", "{2,2,4,4}, {1/4,1/4,1/8,1/8}, 1/2", "{2,2,4,4}, {1/4,1/4,1/4,1/4}, 3/4", "{4,4,4,4}, {1/4,1/4,1/8,1/8}, 1/2", "{4,4,4,4}, {1/4,1/4,1/4,1/4}, 3/4" are similar to the case of the combination "{4,4,4}, {1/4,1/4,1/8,1/8}, 1/4", and are not repeated in the present disclosure.

In the above embodiment, the reason why the terminal does not select the supported combination is as follows. The specification stipulates the supported combination when the TRP number is 1, and the terminal can also support this combination. However, since the terminal does not support dynamic switching between the designated scheme and the S-TRP communication scheme, when the designated scheme adopts M-TRP communication, the terminal cannot switch and must select multiple TRPs. Therefore, the terminal cannot select the combination when TRP is 1.

It can be understood that in the case that capabilities of the terminals are different, the CMR configurations that may be supported are also different. For example, some terminals can support dynamic switching between the S-TRP communication scheme and the CJT scheme. However, some terminals do not support dynamic switching between the S-TRP communication scheme and the CJT scheme. In this case, CMR needs to be restricted.

The present disclosure provides a situation where the terminal does not select or feed back M NZP CSI-RS resource(s) from N NZP CSI-RS resources, thereby improving the feasibility of CJT-based communication.

In the communication method provided by the embodiments of the present disclosure, in the case that a combination of a third beam number combination and *P*ᵥ, β is supported, it is determined based on the first information that the terminal selects and feeds back M NZP CSI-RS resource(s) from N NZP CSI-RS resources, where the third beam number combination is a subset of the first beam number combination.

In some embodiments, in the case that the combination of the third beam number combination and *P*ᵥ, β is supported, the terminal can determine to select and feed back M NZP CSI-RS resource(s) from N NZP CSI-RS resources based on the first information. The third beam number combination is a subset of the first beam number combination.

For example, the third beam number combination is one or more beam combinations corresponding to M NZP CSI-RS resource(s).

For example, in the case that the combination of the third beam number combination and *P*ᵥ and β is supported, the terminal can determine to select M NZP CSI-RS resource(s) from N NZP CSI-RS resources based on the first information. The terminal can also feed back the selected M NZP CSI-RS resource(s).

It can be understood that since the terminal selects and feeds back M NZP CSI-RS resource(s), the network device can perform communication of PDSCH and/or DMRS corresponding to PDSCH based on the M NZP CSI-RS resource(s).

The present disclosure provides a situation in which the terminal selects and feeds back M NZP CSI-RS resource(s) from N NZP CSI-RS resources, thereby improving the feasibility of CJT-based communication.

In the communication method provided by the embodiments of the present disclosure, the case where the combination of the third beam number combination and *P*ᵥ, β is supported includes at least one of the following: the combination of the third beam number combination and *P*ᵥ, β supported by the specification; the combination of the third beam number combination and *P*ᵥ, β supported by the terminal.

In some embodiments, the case where the combination of the third beam number combination and *P*ᵥ, β is supported may include: the combination of the third beam number combination and *P*ᵥ, β supported by the specification.

For example, the specification may pre-set that the combination of the third beam number combination and *P*ᵥ, β is supported. The terminal may then choose to provide CSI feedback for the supported combination. Accordingly, the terminal may also select the NZP CSI-RS resource corresponding to the third beam number combination.

Still taking Table 1 as an example, for the combination of the third beam number combination and *P*ᵥ and β "{2,2,2,2}, {1/8,1/8,1/16,1/16}, 1/4", since the specification does not support the combination of TRP number 1 under the same first parameter combination, the terminal cannot select only 1 NZP CSI-RS resource from 4 NZP CSI-RS resources. However, the terminal can select 2 NZP CSI-RS resources, or select 3 NZP CSI-RS resources from 4 NZP CSI-RS resources. If the terminal itself does not support the combination of TRP number 2, the terminal cannot select only 2 NZP CSI-RS resources from 4 NZP CSI-RS resources.

In some embodiments, the case where the combination of the third beam number combination and *P*ᵥ, β is supported may include: the combination of the third beam number combination and *P*ᵥ, β supported by the terminal.

For example, the terminal may determine by itself whether the combination of the third beam number combination and *P*ᵥ and β is supported. The terminal determines that the combination of the third beam number combination and *P*ᵥ and β is supportable by the terminal based on any possible conditions such as the terminal's own measurement results, the terminal's own hardware support, and the operator's support. The terminal can choose to provide CSI feedback for the supported combination. Correspondingly, the terminal can also select the NZP CSI-RS resource corresponding to the third beam number combination.

It can be understood that the combination of the third beam number combination and *P*ᵥ, β supported by the terminal should be a combination supported by the specification.

The present disclosure provides a situation in which the terminal selects and feeds back M NZP CSI-RS resource(s) from N NZP CSI-RS resources, thereby improving the feasibility of CJT-based communication.

In the communication method provided by the embodiments of the present disclosure, the designated scheme is CJT.

In some embodiments, the PDSCH and/or the DMRS corresponding to the PDSCH are configured to communicate using a designated scheme, and may be configured to communicate using CJT.

CJT can represent joint transmission using multiple TRPs.

The present disclosure provides a situation in which, when CJT communication is performed, the terminal selects and feeds back M NZP CSI-RS resource(s) from N NZP CSI-RS resources, thereby improving the feasibility of CJT-based communication.

In the communication method provided by the embodiments of the present disclosure, CJT includes at least one of the following items: one CMR configured by the network device includes L NZP CSI-RS resource(s), where L is a positive integer and one NZP CSI-RS resource corresponds to one TRP or one TRP group; a spatial domain basis vector is independently fed back for each of the multiple NZP CSI-RS resources; a frequency domain basis vector is independently fed back for each of the multiple NZP CSI-RS resources; and the same frequency domain basis vector is fed back for each of the multiple NZP CSI-RS resources.

In some embodiments, the designated scheme includes that one CMR configured by the network device includes L NZP CSI-RS resource(s), where L is a positive integer and one NZP CSI-RS resource corresponds to one TRP or one TRP group.

It can be understood that when L is 1, it means that one CMR includes only one NZP CSI-RS resource, that is, it corresponds to only one TRP or one TRP group. In this case, the designated scheme is to use S-TRP. When L is greater than 1, it means that one CMR includes only multiple NZP CSI-RS resources, that is, it corresponds to multiple TRPs or multiple TRP groups. In this case, the designated scheme is to use M-TRP.

In other embodiments, the designated scheme includes that at least one CMR among multiple CMRs configured by the network device includes L NZP CSI-RS resource(s).

For example, L can usually be 1, 2, 3 or 4. That is, one CMR usually includes 1-4 NZP CSI-RS resources.

For example, in the case that L is equal to 1, the terminal may not need to select the NZP CSI-RS resource. The network device may directly use the channel corresponding to the one NZP CSI-RS resource to communicate with the terminal on the PDSCH and/or the DMRS corresponding to the PDSCH. The terminal also only needs to provide CSI feedback for the one NZP CSI-RS resource.

For another example, in the case that L is greater than 1, the network device is configured with a corresponding restriction. For example, the network device is configured to indicate that the terminal does not need to make a selection, then the terminal does not need to select one or more NZP CSI-RS resource(s) from multiple NZP CSI-RS resources. The network device may use the channel(s) corresponding to the L NZP CSI-RS resource(s) to communicate with the terminal on PDSCH and/or DMRS corresponding to PDSCH. The terminal only needs to provide CSI feedback for the L NZP CSI-RS resource(s).

For another example, in the case that L is greater than 1, the network device is not configured with restriction. Then the terminal can select one or more NZP CSI-RS resources from L NZP CSI-RS resources. For example, the terminal selects K NZP CSI-RS resource(s) from L NZP CSI-RS resources. It can be understood that K is a positive integer, and K is less than or equal to L. The terminal needs to send indication information to the network device to inform the network device which K NZP CSI-RS resource(s) the terminal has selected. The network device can communicate with the terminal on PDSCH and/or DMRS corresponding to PDSCH based on the channel corresponding to the K NZP CSI-RS resource(s). The terminal only needs to provide CSI feedback for the K NZP CSI-RS resource(s).

In some embodiments, the designated scheme includes independently feeding back a spatial domain basis vector for each NZP CSI-RS resource.

For example, the terminal independently feeds back a spatial domain basis vector for each NZP CSI-RS resource. That is, the terminal selects a specified number of H beams from the total number of CSI-RS ports N1*N2, where H is a positive integer, N1 represents the number of ports in the first dimension, and N2 represents the number of ports in the second dimension.

In some embodiments, the designated scheme includes independently feeding back a frequency domain basis vector for each NZP CSI-RS resource.

For example, the terminal independently feeds back the frequency domain basis vector for each NZP CSI-RS resource. That is, for each NZP CSI-RS resource, the terminal selects v frequency domain basis vector(s) from N3 frequency domain basis vectors, respectively, where v is a positive integer, and N3 represents the product of the number of channel quality indicator (CQI) subbands and the number of precoding matrix indicator (PMI) subbands.

In some embodiments, the designated scheme includes feeding back the same frequency domain basis vector for each NZP CSI-RS resource.

For example, the terminal selects the same frequency domain basis vector for each NZP CSI-RS resource. That is, for each NZP CSI-RS resource, the terminal selects the same v frequency domain basis vector(s) from N3 frequency domain basis vectors.

In some embodiments, the designated scheme includes configuring multiple TRPs for the network device. It will be appreciated that each TRP corresponds to one NZP CSI-RS resource.

The present disclosure provides multiple possible situations of the designated scheme, to determine whether to select and feed back M NZP CSI-RS resource(s) from N NZP CSI-RS resources through the first information, thereby improving the feasibility of CJT-based communication.

In the communication method provided by the embodiments of the present disclosure, the first information is used to instruct the terminal not to select or feed back M NZP CSI-RS resource(s) from N NZP CSI-RS resources; or, the first information is used to instruct the terminal to select and feed back M NZP CSI-RS resource(s) from N NZP CSI-RS resources.

In some embodiments, the first information may be used to instruct the terminal not to select or feed back M NZP CSI-RS resource(s) from the N NZP CSI-RS resources.

For example, the first information sent by the network device may instruct the terminal not to select or feed back M NZP CSI-RS resource(s) from N NZP CSI-RS resources. The terminal determines not to select or feed back M NZP CSI-RS resource(s) from N NZP CSI-RS resources based on the instruction of the first information.

In some embodiments, the first information can be used to instruct the terminal to select and feed back M NZP CSI-RS resource(s) from N NZP CSI-RS resources.

For example, the first information sent by the network device may instruct the terminal to select and feed back M NZP CSI-RS resource(s) from N NZP CSI-RS resources. The terminal determines to select and feed back M NZP CSI-RS resource(s) from N NZP CSI-RS resources based on the instruction of the first information.

The first information in the present disclosure can directly instruct the terminal whether to select and feed back M NZP CSI-RS resource(s) from N NZP CSI-RS resources, thereby improving the feasibility of CJT-based communication.

In the communication method provided in the embodiments of the present disclosure, FIG. 3 is a flowchart of another communication method according to an exemplary embodiment. As shown in FIG. 3, the method may further include the following steps.

In step S21, second information is sent.

In some embodiments, the terminal may send the second information.

For example, the terminal may send the second information to the network device.

In some embodiments, the second information includes at least one of the following: whether the terminal supports the capability to dynamically switch between the designated scheme and the S-TRP communication scheme; the combination of the second beam number combination and *P*ᵥ, β supported by the terminal; the combination of the third beam number combination and *P*ᵥ, β not supported by the terminal.

In some embodiments, the second information includes whether the terminal supports the capability to dynamically switch between the designated scheme and the S-TRP communication scheme.

For example, the terminal sends second information to the network device indicating whether the terminal supports the capability to dynamically switch between the designated scheme and the S-TRP communication scheme, so as to inform the network device that the terminal supports the capability to dynamically switch between the designated scheme and the S-TRP communication scheme.

In some embodiments, the second information includes a combination of a second beam number combination and *P*ᵥ, β that is not supported by the terminal.

For example, the terminal sends to the network device second information including a combination of a second beam number combination and P , β that the terminal does not support, so as to inform the network device of the combination of the second beam number combination and *P*ᵥ, β that the terminal does not support.

In some embodiments, the second information includes the combination of the third beam number combination and *P*ᵥ, β supported by the terminal.

For example, the terminal sends second information including the combination of the third beam number combination and *P*ᵥ*,* β supported by the terminal to the network device, so as to inform the network device of the combination of the third beam number combination and *P*ᵥ, β supported by the terminal.

In the present disclosure, the terminal can also report the second information to the network device, and determine whether to select and feed back M NZP CSI-RS resource(s) from N NZP CSI-RS resources through the first information, thereby improving the feasibility of CJT-based communication.

Based on the same concept, the present disclosure also provides a communication method performed a network device side.

FIG. 4 is a flowchart of another communication method according to an exemplary embodiment. As shown in FIG. 4, the method is performed by a network device and may include the following steps.

In step S31, first information is sent.

In some embodiments, the network device sends first information. The first information may be used to determine that a CMR includes N NZP CSI-RS resource(s), where N is a positive integer.

For example, the network device sends first information to the terminal. The first information is used to determine that the CMR includes 1 NZP CSI-RS resource.

For another example, the network device sends first information to the terminal. The first information is used to determine that the CMR includes multiple NZP CSI-RS resources.

In some embodiments, in the case that N is greater than 1, the first information is also used to determine whether the terminal selects and feeds back M NZP CSI-RS resource(s) from N NZP CSI-RS resources.

In some embodiments, in the case that N is greater than 1, the first information may be used by the terminal to determine whether to select and feed back M NZP CSI-RS resource(s) from N NZP CSI-RS resources, where M is less than or equal to N.

It can be understood that the case where N is greater than 1 means that the CMR includes multiple NZP CSI-RS resources.

For example, in the case where multiple NZP CSI-RS resources are included in the CMR, the first information can be used by the terminal to determine whether to select and feed back M NZP CSI-RS resource(s) from N NZP CSI-RS resources.

For example, the first information indicates whether the terminal selects and feeds back M NZP CSI-RS resource(s) from N NZP CSI-RS resources.

For another example, in the case that the terminal receives the first information, it determines whether to select and feed back M NZP CSI-RS resource(s) from N NZP CSI-RS resources based on the preset rule. It can be understood that the preset rule predefines whether the terminal selects and feeds back M NZP CSI-RS resource(s) from N NZP CSI-RS resources.

The present disclosure determines whether to select and feed back M NZP CSI-RS resource(s) from N NZP CSI-RS resources through the first information, thereby improving the communication flexibility based on the unified TCI state.

In the communication method provided by the embodiments of the present disclosure, the first information is also used to determine at least one first beam number combination, where each beam number in the first beam number combination is respectively associated with one NZP CSI-RS resource.

It can be understood that the first information is used to determine various embodiments of at least one first beam number combination, which may refer to the description of the corresponding embodiment on the terminal side and its related embodiments, and will not be elaborated in the present disclosure.

The first information of the present disclosure can also determine the beam number combination, so as to determine whether to select and feed back M NZP CSI-RS resource(s) from N NZP CSI-RS resources, thereby improving the communication flexibility based on the unified TCI state.

In the communication method provided by the embodiments of the present disclosure, the first information is also used to determine at least one first parameter combination, where the first parameter combination includes a frequency domain basis vector combination parameter *P*ᵥ and a non-zero coefficient parameter β.

It can be understood that the second information is used to determine various embodiments of at least one first parameter combination, which may refer to the description of the corresponding embodiment on the terminal side and its related embodiments, and will not be elaborated in the present disclosure.

The first information in the present disclosure can also determine a first parameter combination, so as to determine whether to select and feed back M NZP CSI-RS resource(s) from N NZP CSI-RS resources through the first information, thereby improving the communication flexibility based on the unified TCI state.

In the communication method provided by the embodiments of the present disclosure, the first information is used to instruct the terminal not to select or feed back M NZP CSI-RS resource(s) from N NZP CSI-RS resources; or, the first information is used to instruct the terminal to select and feed back M NZP CSI-RS resource(s) from N NZP CSI-RS resources.

It can be understood that, with regard to various embodiments of the first information configuration, reference may be made to the description of the corresponding embodiment on the terminal side and its associated embodiments, which is not elaborated in the present disclosure.

The first information in the present disclosure can directly instruct the terminal whether to select and feed back M NZP CSI-RS resource(s) from N NZP CSI-RS resources, thereby improving the communication flexibility based on the unified TCI state.

In the communication method provided in the embodiments of the present disclosure, FIG. 5 is a flowchart of another communication method according to an exemplary embodiment. As shown in FIG. 5, the method may further include the following steps.

In step S41, second information is received.

In some embodiments, the network device may receive the second information.

For example, the network device may receive the second information sent by the terminal.

In some embodiments, the second information includes at least one of the following: whether the terminal supports the capability to dynamically switch between the designated scheme and the S-TRP communication scheme; the combination of the second beam number combination and *P*ᵥ, β supported by the terminal; the combination of the third beam number combination and *P*ᵥ, β not supported by the terminal.

It can be understood that, with regard to various embodiments of the second information configuration, reference may be made to the description of the corresponding embodiment on the terminal side and its associated embodiments, which is not elaborated in the present disclosure.

The terminal in the present disclosure can also report the second information to the network device, and determine whether to select and feed back M NZP CSI-RS resource(s) from N NZP CSI-RS resources through the first information, thereby improving the communication flexibility based on the unified TCI state.

In the communication method provided by the embodiments of the present disclosure, in the case that the combination of the second beam number combination and *P*ᵥ, β is not supported by the terminal, the first information is used to determine that the terminal does not select or feed back M NZP CSI-RS resource(s) from N NZP CSI-RS resources, where the second beam number combination is a subset of the first beam number combination.

In some embodiments, in the case that the combination of the second beam number combination and *P*ᵥ, β is not supported, the first information can be used by the terminal to determine not to select or feed back M NZP CSI-RS resource(s) from N NZP CSI-RS resources. The second beam number combination is a subset of the first beam number combination.

It can be understood that in the case that the combination of the second beam number combination and *P*ᵥ, β is not supported, the embodiments of the first information can refer to the description of the corresponding embodiment on the terminal side and its associated embodiments, which is not elaborated in the present disclosure.

The present disclosure provides a situation where the terminal does not select or feed back M NZP CSI-RS resource(s) from N NZP CSI-RS resources, thereby improving the communication flexibility based on the unified TCI state.

In the communication method provided by the embodiments of the present disclosure, the situation in which the combination of the second beam number combination and *P*ᵥ, β is not supported by the terminal includes at least one of the following: the specification stipulates that the combination of the second beam number combination and *P*ᵥ, β is not supported; the terminal does not support the combination of the second beam number combination and *P*ᵥ, β; the terminal supports the combination of the second beam number combination and *P*ᵥ, β, and the terminal does not support dynamic switching between the designated scheme and the S-TRP communication scheme, where the designated scheme adopts M-TRP communication, and the second beam number combination includes one beam number.

It can be understood that for the embodiments in which the combination of the second beam number combination and *P*ᵥ, β is not supported, reference may be made to the description of the corresponding embodiments on the terminal side and their associated embodiments, which is not elaborated in the present disclosure.

The present disclosure provides a situation where the terminal does not select or feed back M NZP CSI-RS resource(s) from N NZP CSI-RS resources, thereby improving the communication flexibility based on the unified TCI state.

In the communication method provided by the embodiments of the present disclosure, in the case that a combination of a third beam number combination and *P*ᵥ, β is supported by the terminal, the first information is used to determine that the terminal selects and feeds back M NZP CSI-RS resource(s) from N NZP CSI-RS resources, where the third beam number combination is a subset of the first beam number combination.

In some embodiments, in the case that the combination of the third beam number combination and *P*ᵥ and β is supported, the first information can be used by the terminal to determine to select and feed back M NZP CSI-RS resource(s) from N NZP CSI-RS resources. The third beam number combination is a subset of the first beam number combination.

It can be understood that in the case that the combination of the third beam number combination and *P*ᵥ, β is supported, the embodiments of the first information can refer to the description of the corresponding embodiment on the terminal side and its associated embodiments, which is not elaborated in the present disclosure.

The present disclosure provides a situation in which the terminal selects and feeds back M NZP CSI-RS resource(s) from N NZP CSI-RS resources, thereby improving the communication flexibility based on a unified TCI state.

In the communication method provided in the embodiments of the present disclosure, the situation in which the combination of the third beam number combination and *P*ᵥ, β is supported by the terminal includes at least one of the following: the combination of a third beam number combination and *P*ᵥ, β supported by the specification; a combination of a third beam number combination and *P*ᵥ, β supported by the terminal.

It can be understood that various embodiments in which the combination of the third beam number combination and *P*ᵥ and β is supported can refer to the description of the corresponding embodiments on the terminal side and their associated embodiments, which is not elaborated in the present disclosure.

The present disclosure provides a situation in which the terminal selects and feeds back M NZP CSI-RS resource(s) from N NZP CSI-RS resources, thereby improving the communication flexibility based on a unified TCI state.

In the communication method provided by the embodiments of the present disclosure, the designated scheme is CJT.

It can be understood that for each embodiment in which the designated scheme is CJT, reference can be made to the description of various embodiments in which the designated scheme on the terminal side is CJT and their related embodiments, which is not elaborated in the present disclosure.

The present disclosure provides a situation in which, when CJT communication is performed, the terminal selects and feeds back M NZP CSI-RS resource(s) from N NZP CSI-RS resources, thereby improving the feasibility of CJT-based communication.

In the communication method provided by the embodiments of the present disclosure, CJT includes at least one of the following items: one CMR configured by the network device includes L NZP CSI-RS resource(s), where L is a positive integer and one NZP CSI-RS resource corresponds to one TRP or one TRP group; a spatial domain basis vector is independently fed back for each of the multiple NZP CSI-RS resources; a frequency domain basis vector is independently fed back for each of the multiple NZP CSI-RS resources; and the same frequency domain basis vector is fed back for each of the multiple NZP CSI-RS resources.

It can be understood that the various embodiments included in the designated scheme can refer to the description of the corresponding embodiment on the terminal side and its related embodiments, which is not elaborated in the present disclosure.

The present disclosure provides multiple possible situations of the designated scheme, to determine whether to select and feed back M NZP CSI-RS resource(s) from N NZP CSI-RS resources through the first information, which improves the communication flexibility based on the unified TCI state.

It should be noted that those skilled in the art can understand that the various implementations/embodiments involved in the embodiments of the present disclosure can be used in conjunction with the aforementioned embodiments or can be used independently. Whether used alone or in conjunction with the aforementioned embodiments, the implementation principle is similar. In the implementation of the present disclosure, some embodiments are described in terms of implementations used together. Those skilled in the art can understand that such examples are not limitations of the embodiments of the present disclosure.

Based on the same concept, the embodiments of the present disclosure also provide a communication apparatus and device.

It is understandable that the communication apparatus and device provided by the embodiments of the present disclosure include hardware structures and/or software modules corresponding to the execution of each function in order to realize the above functions. In combination with the units and algorithm steps of each example disclosed in the embodiments of the present disclosure, the embodiments of the present disclosure can be implemented in the form of hardware or a combination of hardware and computer software. Whether a function is executed in the form of hardware or computer software driving hardware depends on the specific application and design constraints of the technical solution. Those skilled in the art can use different methods to implement the described functions for each specific application, however, such implementation should not be considered to go beyond the scope of the technical solution of the embodiments of the present disclosure.

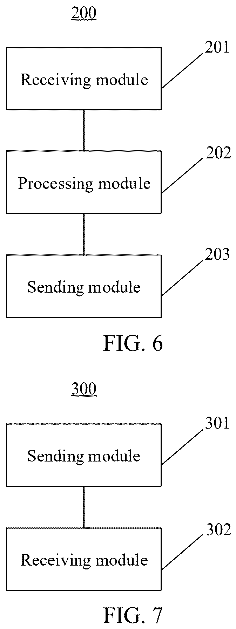

FIG. 6 is a schematic diagram of a communication apparatus according to an exemplary embodiment. Referring to FIG. 6, the apparatus 200 includes: a receiving module 201, configured to receive first information, where the first information is used to determine that a CMR includes N NZP CSI-RS resource(s), where N is a positive integer; and a processing module 202, configured to determine whether the terminal selects and feeds back M NZP CSI-RS resource(s) from the N NZP CSI-RS resources when N is greater than 1, where M is less than or equal to N.

The present disclosure determines whether to select and feed back M NZP CSI-RS resource(s) from N NZP CSI-RS resources through the first information, thereby improving the feasibility of CJT-based communication.

In some implementations, the first information is also used to determine at least one first beam number combination, where each beam number in the first beam number combination is associated with one NZP CSI-RS resource, respectively.

The first information in the present disclosure can also determine the beam number combination, so as to determine through the first information whether to select and feed back M NZP CSI-RS resource(s) from N NZP CSI-RS resources, thereby improving the feasibility of CJT-based communication.

In some implementations, the first information is further used to determine at least one first parameter combination, where the first parameter combination includes a frequency domain basis vector combination parameter *P*ᵥ and a non-zero coefficient parameter β.

The first information in the present disclosure can also determine a first parameter combination, so as to determine whether to select and feed back M NZP CSI-RS resource(s) from N NZP CSI-RS resources through the first information, thereby improving the feasibility of CJT-based communication.

In some implementations, the processing module 202 is further configured to: determine that the terminal does not select or feed back M NZP CSI-RS resource(s) from N NZP CSI-RS resources in the case that the combination of the second beam number combination and *P*ᵥ, β is not supported, where the second beam number combination is a subset of the first beam number combination.

The present disclosure provides a situation where the terminal does not select or feed back M NZP CSI-RS resource(s) from N NZP CSI-RS resources, thereby improving the feasibility of CJT-based communication.

In some implementations, the situation where the combination of the second beam number combination and *P*ᵥ, β is not supported includes at least one of the following: the specification stipulates that the combination of the second beam number combination and *P*ᵥ, β is not supported; the terminal does not support the combination of the second beam number combination and *P*ᵥ, β; the terminal supports the combination of the second beam number combination and *P*ᵥ, β, and the terminal does not support dynamic switching between the designated scheme and the single transmission and receiving point (S-TRP) communication scheme, where the designated scheme adopts multiple transmission and receiving point (M-TRP) communication, and the second beam number combination includes one beam number.

The present disclosure provides a situation where the terminal does not select or feed back M NZP CSI-RS resource(s) from N NZP CSI-RS resources, thereby improving the feasibility of CJT-based communication.

In some implementations, the processing module 202 is further configured to: determine that the terminal selects and feeds back M NZP CSI-RS resource(s) from N NZP CSI-RS resources in the case that a combination of a third beam number combination and *P*ᵥ*,* β is supported, where the third beam number combination is a subset of the first beam number combination.

The present disclosure provides a situation in which the terminal selects and feeds back M NZP CSI-RS resource(s) from N NZP CSI-RS resources, thereby improving the feasibility of CJT-based communication.

In some implementations, the case where the combination of the third beam number combination and *P*ᵥ, β is supported includes at least one of the following: a combination of the third beam number combination and *P*ᵥ, β supported by the specification; and a combination of the third beam number combination and *P*ᵥ, β supported by the terminal.

The present disclosure provides a situation in which the terminal selects and feeds back M NZP CSI-RS resource(s) from N NZP CSI-RS resources, thereby improving the feasibility of CJT-based communication.

In some implementations, the designated scheme is coherent joint transmission (CJT).

The present disclosure provides a situation in which, when CJT communication is performed, the terminal selects and feeds back M NZP CSI-RS resource(s) from N NZP CSI-RS resources, thereby improving the feasibility of CJT-based communication.

In some implementations, CJT includes at least one of the following: one CMR configured by the network device includes L NZP CSI-RS resource(s), where L is a positive integer and one NZP CSI-RS resource corresponds to one TRP or one TRP group; a spatial domain basis vector is independently fed back for each of the multiple NZP CSI-RS resources; a frequency domain basis vector is independently fed back for each of the multiple NZP CSI-RS resources; and the same frequency domain basis vector is fed back for each of the multiple NZP CSI-RS resources.

The present disclosure provides multiple possible situations of the designated scheme, to determine whether to select and feed back M NZP CSI-RS resource(s) from N NZP CSI-RS resources through the first information, thereby improving the feasibility of CJT-based communication.

In some implementations, the first information is used to instruct the terminal not to select or feed back M NZP CSI-RS resource(s) from N NZP CSI-RS resources; or, the first information is used to instruct the terminal to select and feed back M NZP CSI-RS resource(s) from N NZP CSI-RS resources.

The first information in the present disclosure can directly indicate the terminal whether to select and feed back M NZP CSI-RS resource(s) from N NZP CSI-RS resources, thereby improving the feasibility of CJT-based communication.

In some implementations, the apparatus 200 further includes: a sending module 203, configured to send second information; where the second information includes at least one of the following: whether the terminal supports the capability to dynamically switch between a designated scheme and an S-TRP communication scheme; a combination of a second beam number combination and *P*ᵥ, β not supported by the terminal; a combination of a third beam number combination and *P*ᵥ, β supported by the terminal.

The terminal in the present disclosure can also report the second information to the network device, and determine whether to select and feed back M NZP CSI-RS resource(s) from N NZP CSI-RS resources through the first information, thereby improving the feasibility of CJT-based communication.

FIG. 7 is a schematic diagram of another communication apparatus according to an exemplary embodiment. Referring to FIG. 7, the apparatus 300 includes: a sending module 301, configured to send first information, the first information being used to determine that the CMR includes N NZP CSI-RS resource(s), where N is a positive integer.

The present disclosure determines whether to select and feed back M NZP CSI-RS resource(s) from N NZP CSI-RS resources through the first information, improving the feasibility of CJT-based communication.

In some implementations, the first information is also used to determine at least one first beam number combination, where each beam number in the first beam number combination is associated with one NZP CSI-RS resource, respectively.

The first information in the present disclosure can also determine the beam number combination, so as to determine whether to select and feed back M NZP CSI-RS resource(s) from N NZP CSI-RS resources through the first information, thereby improving the feasibility of CJT-based communication.

In some implementations, the first information is further used to determine at least one first parameter combination, where the first parameter combination includes a frequency domain basis vector combination parameter *P*ᵥ and a non-zero coefficient parameter β.

The first information in the present disclosure can also determine a first parameter combination, so as to determine whether to select and feed back M NZP CSI-RS resource(s) from N NZP CSI-RS resources through the first information, thereby improving the feasibility of CJT-based communication.

In some implementations, the first information is used to instruct the terminal not to select or feed back M NZP CSI-RS resource(s) from N NZP CSI-RS resources; or, the first information is used to instruct the terminal to select and feed back M NZP CSI-RS resource(s) from N NZP CSI-RS resources.

The first information in the present disclosure can directly indicate the terminal whether to select and feed back M NZP CSI-RS resource(s) from N NZP CSI-RS resources, thereby improving the feasibility of CJT-based communication.

In some implementations, the apparatus 300 also includes: a receiving module 302, configured to receive second information; where the second information includes at least one of the following: whether the terminal supports the capability to dynamically switch between a designated scheme and an S-TRP communication scheme; a combination of a second beam number combination and *P*ᵥ, β not supported by the terminal; a combination of a third beam number combination and *P*ᵥ, β supported by the terminal.

The terminal in the present disclosure can also report the second information to the network device, and determine whether to select and feed back M NZP CSI-RS resource(s) from N NZP CSI-RS resources through the first information, thereby improving the feasibility of CJT-based communication.

In some implementations, the situation where the combination of the second beam number combination and *P*ᵥ, β is not supported by the terminal includes at least one of the following: the specification stipulates that the combination of the second beam number combination and *P*ᵥ, β is not supported; the terminal does not support the combination of the second beam number combination and *P*ᵥ, β; the terminal supports the combination of the second beam number combination and *P*ᵥ, β, and the terminal does not support dynamic switching between the designated scheme and the single transmission and receiving point (S-TRP) communication scheme, where the designated scheme adopts multiple transmission and receiving point (M-TRP) communication, and the second beam number combination includes one beam number.

The present disclosure provides a situation where the terminal does not select or feed back M NZP CSI-RS resource(s) from N NZP CSI-RS resources, thereby improving the feasibility of CJT-based communication.

In some implementations, the case where the combination of the third beam number combination and *P*ᵥ, β is supported by the terminal includes at least one of the following: a combination of the third beam number combination and P , β supported by the specification; and a combination of the third beam number combination and *P*ᵥ, β supported by the terminal.

The present disclosure provides a scenario where the terminal selects and feeds back M NZP CSI-RS resource(s) from N NZP CSI-RS resources, which improves the feasibility of CJT-based communication.

In some implementations, the designated scheme is coherent joint transmission (CJT).

The present disclosure provides a situation in which, when CJT communication is performed, the terminal selects and feeds back M NZP CSI-RS resource(s) from N NZP CSI-RS resources, thereby improving the feasibility of CJT-based communication.

In some implementations, CJT includes at least one of the following: one CMR configured by the network device includes L NZP CSI-RS resource(s), where L is a positive integer and one NZP CSI-RS resource corresponds to one TRP or one TRP group; a spatial domain basis vector is independently fed back for each of the multiple NZP CSI-RS resources; a frequency domain basis vector is independently fed back for each of the multiple NZP CSI-RS resources; and the same frequency domain basis vector is fed back for each of the multiple NZP CSI-RS resources.

The present disclosure provides multiple possible situations of the designated scheme, to determine whether to select and feed back M NZP CSI-RS resource(s) from N NZP CSI-RS resources through the first information, thereby improving the feasibility of CJT-based communication.

It is understandable that the above-mentioned apparatus 300 may also include any possible modules such as a processing module, which is not limited in the present disclosure.

Regarding the apparatuses in the above embodiments, the specific manner in which each module performs operations has been described in detail in the embodiments of the method, and will not be elaborated here.

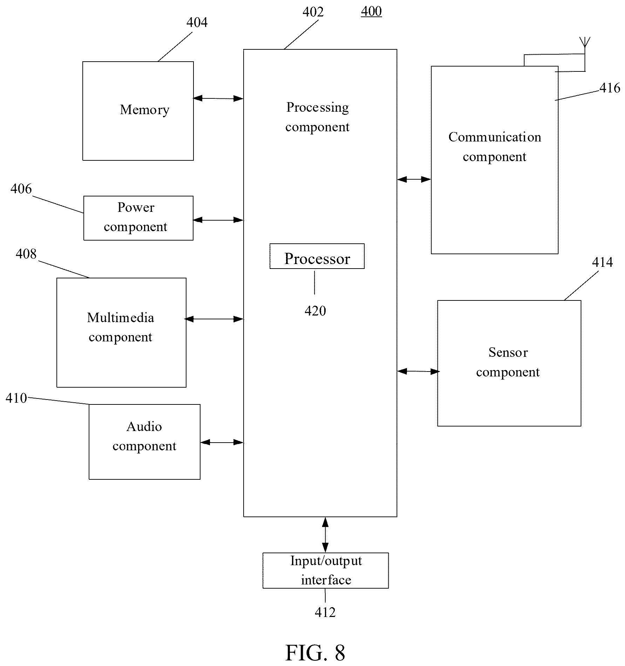

FIG. 8 is a schematic diagram of a communication device according to an exemplary embodiment. For example, the device 400 may be any terminal such as a mobile phone, a computer, a digital broadcast terminal, a message transceiver device, a game console, a tablet device, a medical device, a fitness device, a personal digital assistant, etc.

Referring to FIG. 8, the device 400 may include one or more of the following components: a processing component 402, a memory 404, a power component 406, a multimedia component 408, an audio component 410, an input/output (I/O) interface 412, a sensor component 414, and a communication component 416.

The processing component 402 generally controls the overall operation of the device 400, such as operations associated with display, phone calls, data communications, camera operations, and recording operations. The processing component 402 may include one or more processors 420 to execute instructions to complete all or part of the steps of the above-mentioned method. In addition, the processing component 402 may include one or more modules to facilitate the interaction between the processing component 402 and other components. For example, the processing component 402 may include a multimedia module to facilitate the interaction between the multimedia component 408 and the processing component 402.

The memory 404 is configured to store various types of data to support operations on the device 400. Examples of such data include instructions for any application or method operating on the device 400, contact data, phone book data, messages, pictures, videos, etc. The memory 404 can be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic storage, a flash memory, a magnetic disk or an optical disk.

The power component 406 provides power to the various components of the device 400. The power component 406 may include a power management system, one or more power supplies, and other components associated with generating, managing, and distributing power to the device 400.

The multimedia component 408 includes a screen that provides an output interface between the device 400 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, swipe, and gestures on the touch panel. The touch sensor may not only sense the boundaries of the touch or swipe action, but also detect the duration and pressure associated with the touch or swipe operation. In some embodiments, the multimedia component 408 includes a front camera and/or a rear camera. When the device 400 is in an operating mode, such as a shooting mode or a video mode, the front camera and/or the rear camera may receive external multimedia data. Each front camera and the rear camera may be a fixed optical lens system or have a focal length and optical zoom capability.

The audio component 410 is configured to output and/or input audio signals. For example, the audio component 410 includes a microphone (MIC), and when the device 400 is in an operating mode, such as a call mode, a recording mode, and a speech recognition mode, the microphone is configured to receive an external audio signal. The received audio signal can be further stored in the memory 404 or sent via the communication component 416. In some embodiments, the audio component 410 also includes a speaker for outputting audio signals.

The I/O interface 412 provides an interface between the processing component 402 and peripheral interface modules, such as keyboards, click wheels, buttons, etc. These buttons may include but are not limited to: a home button, a volume button, a start button, and a lock button.

The sensor assembly 414 includes one or more sensors for providing various aspects of status assessment for the device 400. For example, the sensor assembly 414 can detect the open/closed state of the device 400, the relative positioning of components, such as the display and keypad of the device 400, and the sensor assembly 414 can also detect the position change of the device 400 or a component of the device 400, the presence or absence of user contact with the device 400, the orientation or acceleration/deceleration of the device 400, and the temperature change of the device 400. The sensor assembly 414 may include a proximity sensor configured to detect the presence of nearby objects without any physical contact. The sensor assembly 414 may also include an optical sensor, such as a CMOS or CCD image sensor, for use in imaging applications. In some embodiments, the sensor assembly 414 may also include an accelerometer, a gyroscope sensor, a magnetic sensor, a pressure sensor, or a temperature sensor.

The communication component 416 is configured to facilitate wired or wireless communication between the device 400 and other devices. The device 400 can access a wireless network based on a communication standard, such as WiFi, 2G or 3G, or a combination thereof. In an exemplary embodiment, the communication component 416 receives a broadcast signal or broadcast-related information from an external broadcast management system via a broadcast channel. In an exemplary embodiment, the communication component 416 also includes a near field communication (NFC) module to facilitate short-range communication. For example, the NFC module can be implemented based on radio frequency identification (RFID) technology, infrared data association (IrDA) technology, Ultra-wideband (UWB) technology, Bluetooth (BT) technology and other technologies.

In an exemplary embodiment, the device 400 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above methods.

In an exemplary embodiment, a non-transitory computer-readable storage medium including instructions is also provided, such as a memory 404 including instructions, which can be executed by a processor 420 of the device 400 to perform the above method. For example, the non-transitory computer-readable storage medium can be a ROM, a random access memory (RAM), a CD-ROM, a magnetic tape, a floppy disk, an optical data storage device, etc.

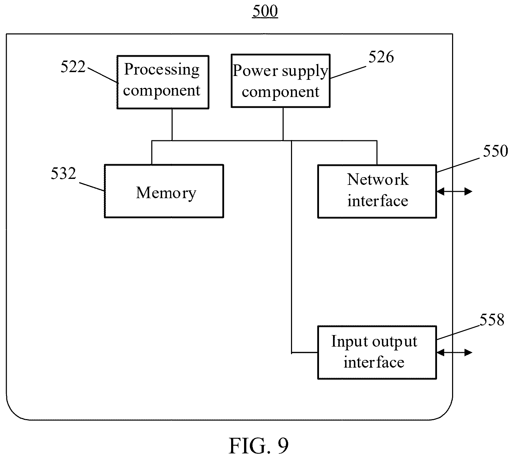

FIG. 9 is a schematic diagram of another communication apparatus according to an exemplary embodiment. For example, the device 500 may be provided as a base station, or a server. Referring to FIG. 9, the device 500 includes a processing component 522, which further includes one or more processors, and a memory resource represented by a memory 532 for storing instructions executable by the processing component 522, such as an application. The application stored in the memory 532 may include one or more modules, each corresponding to a set of instructions. In addition, the processing component 522 is configured to execute instructions to perform the above methods.

The device 500 may also include a power supply component 526 configured to perform power management of the device 500, a wired or wireless network interface 550 configured to connect the device 500 to a network, and an input/output (I/O) interface 558. The device 500 may operate based on an operating system stored in the memory 532, such as Windows Server^{™}, Mac OS X^{™}, Unix^{™}, Linux^{™}, FreeBSD^{™}, or the like.

The present disclosure provides a configuration restriction method of CMR when the terminal does not support dynamic selection of STRP and CJT during PDSCH CJT transmission, as well as an NZP CSI-RS quantity selection configuration and restriction method, thereby improving the feasibility of CJT-based communication.

It is further understood that in the present disclosure, "multiple" refers to two or more than two, and other quantifiers are similar thereto. "And/or" describes the association relationship of associated objects, indicating that three relationships may exist. For example, A and/or B may represent: A exists alone, A and B exist at the same time, and B exists alone. The character "/" generally indicates that the associated objects before and after are in an "or" relationship. The singular forms "a/an", " said " and " the" are also intended to include plural forms, unless the context clearly indicates other meanings.

It is further understood that the terms "first", "second", etc. are used to describe various information, but such information should not be limited to these terms. These terms are only used to distinguish the same type of information from each other, and do not indicate a specific order or degree of importance. In fact, the expressions "first", "second", etc. can be used interchangeably. For example, without departing from the scope of the present disclosure, the first information can also be referred to as the second information, and similarly, the second information can also be referred to as the first information.

It is further understood that the meanings of the words "in response to" and "if' in the present disclosure depend on the context and actual usage scenario, and the word "in response to" as used herein may be interpreted as "at the time" or "when" or "if" or "in a case that".

It is further understood that, although the operations are described in a specific order in the drawings in the embodiments of the present disclosure, it should not be understood as requiring the operations to be performed in the specific order shown or in a serial order, or requiring the execution of all the operations shown to obtain the desired results. In certain environments, multitasking and parallel processing may be advantageous.

Those skilled in the art will readily appreciate other implementations of the present disclosure after considering the specification and practicing the content disclosed herein. This application is intended to cover any modifications, uses or adaptations of the present disclosure, which follow the general principles of the present disclosure and include common knowledge or customary technical means in the art that are not disclosed in the present disclosure.

It should be understood that the present disclosure is not limited to the precise structures that have been described above and shown in the drawings, and that various modifications and changes may be made without departing from the scope thereof. The scope of the present disclosure is limited only by the scope of the appended claims.

## Claims

1. A communication method, the method being performed by a terminal, and comprising:
receiving first information, wherein the first information is used to determine that a channel measurement resource (CMR) comprises N non-zero power channel state information reference signal (NZP CSI-RS) resource(s), wherein N is a positive integer; and
in a case that N is greater than 1, determining whether the terminal selects and feeds back M NZP CSI-RS resource(s) from the N NZP CSI-RS resource(s), wherein M is less than or equal to N.

2. The method according to claim 1, wherein the first information is further used to determine at least one first beam number combination, wherein individual beam numbers in the first beam number combination are associated with one NZP CSI-RS resource, respectively.

3. The method according to claim 2, wherein the first information is further used to determine at least one first parameter combination, wherein the first parameter combination comprises a frequency domain basis vector combination parameter *P*ᵥ and a non-zero coefficient parameter β.

4. The method according to claim 2 or 3, wherein in a case that a combination of a second beam number combination and *P*ᵥ and β is not supported, it is determined that the terminal does not select or feed back M NZP CSI-RS resource(s) from the N NZP CSI-RS resource(s), wherein the second beam number combination is a subset of the first beam number combination.

5. The method according to claim 4, wherein a situation where the combination of the second beam number combination and *P*ᵥ and β is not supported comprises at least one of:
a specification stipulates that the combination of the second beam number combination and *P*ᵥ and β is not supported;
the terminal does not support the combination of the second beam number combination and *P*ᵥ and β; and
the terminal supports the combination of the second beam number combination and *P*ᵥ and β, and the terminal does not support dynamic switching between a designated scheme and a single transmission and receiving point (S-TRP) communication scheme, wherein the designated scheme adopts multiple transmission and receiving point (M-TRP) communication, and the second beam number combination comprises one beam number.

6. The method according to claim 2 or 3, wherein in a case that a combination of a third beam number combination and *P*ᵥ and β is supported, it is determined that the terminal selects and feeds back M NZP CSI-RS resource(s) from the N NZP CSI-RS resource(s), wherein the third beam number combination is a subset of the first beam number combination.

7. The method according to claim 6, wherein a situation where the combination of the third beam number combination and *P*ᵥ and β is supported comprises at least one of:
a combination of the third beam number combination and *P*ᵥ and β supported by a specification; and
a combination of the third beam number combination and *P*ᵥ and β supported by the terminal.

8. The method according to claim 5, wherein the designated scheme is coherent joint transmission (CJT).

9. The method according to claim 8, wherein the CJT comprises at least one of:
one CMR configured by a network device comprising L NZP CSI-RS resource(s), wherein L is a positive integer, and one NZP CSI-RS resource corresponds to one TRP or one TRP group;
independently feeding back a spatial domain basis vector for each of multiple NZP CSI-RS resources;
independently feeding back a frequency domain basis vector for each of the multiple NZP CSI-RS resources; and
feeding back a same frequency domain basis vector for each of the multiple NZP CSI-RS resources.

10. The method according to any one of claims 1 to 9, wherein the first information is used to instruct the terminal not to select or feed back M NZP CSI-RS resource(s) from the N NZP CSI-RS resource(s); or,
the first information is used to instruct the terminal to select and feed back M NZP CSI-RS resource(s) from the N NZP CSI-RS resource(s).

11. The method according to claim 1, wherein the method further comprises:
sending second information;
wherein the second information comprises at least one of:
whether the terminal supports a capability of dynamically switching between a designated scheme and an S-TRP communication scheme;
a combination of a second beam number combination and *P*ᵥ and β that is not supported by the terminal; and
a combination of a third beam number combination and *P*ᵥ and β that is supported by the terminal.

12. A communication method, the method being performed by a network device, and comprising:
sending first information, wherein the first information is used to determine that a channel measurement resource (CMR) comprises N non-zero power channel state information reference signal (NZP CSI-RS) resource(s), wherein N is a positive integer.

13. The method according to claim 12, wherein the first information is further used to determine at least one first beam number combination, wherein individual beam numbers in the first beam number combination are associated with one NZP CSI-RS resource, respectively.

14. The method according to claim 13, wherein the first information is further used to determine at least one first parameter combination, wherein the first parameter combination comprises a frequency domain basis vector combination parameter *P*ᵥ and a non-zero coefficient parameter β.

15. The method according to any one of claims 12 to 14, wherein the first information is used to instruct the terminal not to select or feed back M NZP CSI-RS resource(s) from N NZP CSI-RS resource(s), wherein M is less than or equal to N; or,
the first information is used to instruct the terminal to select and feed back M NZP CSI-RS resource(s) from the N NZP CSI-RS resource(s).

16. The method according to any one of claims 12 to 15, wherein the method further comprises:
receiving second information;
wherein the second information comprises at least one of:
whether the terminal supports a capability of dynamically switching between a designated scheme and an S-TRP communication scheme;
a combination of a second beam number combination and *P*ᵥ, β that is not supported by the terminal; and
a combination of a third beam number combination and *P*ᵥ and β that is supported by the terminal.

17. The method according to claim 16, wherein a situation where the combination of the second beam number combination and *P*ᵥ and β is not supported by the terminal comprises at least one of:
a specification stipulates that the combination of the second beam number combination and *P*ᵥ and β is not supported;
the terminal does not support the combination of the second beam number combination and *P*ᵥ and β; and
the terminal supports the combination of the second beam number combination and *P*ᵥ and β, and the terminal does not support dynamic switching between the designated scheme and the single transmission and receiving point (S-TRP) communication scheme, wherein the designated scheme adopts multiple transmission and receiving point (M-TRP) communication, and the second beam number combination comprises one beam number.

18. The method according to claim 16, wherein a situation where the combination of the third beam number combination and *P*ᵥ and β is supported by the terminal comprises at least one of:
a combination of the third beam number combination and *P*ᵥ and β supported by a specification; and
a combination of the third beam number combination and *P*ᵥ and β supported by the terminal.

19. The method according to claim 17, wherein the designated scheme is coherent joint transmission (CJT).

20. The method according to claim 19, wherein the CJT comprises at least one of:
one CMR configured by the network device comprising L NZP CSI-RS resource(s), wherein L is a positive integer, and one NZP CSI-RS resource corresponds to one TRP or one TRP group;
independently feeding back a spatial domain basis vector for each of multiple NZP CSI-RS resources;
independently feeding back a frequency domain basis vector for each of the multiple NZP CSI-RS resources; and
feeding back a same frequency domain basis vector for each of the multiple NZP CSI-RS resources.

21. A communication apparatus, comprising:
a receiving module, configured to receive first information, wherein the first information is used to determine that a channel measurement resource (CMR) comprises N non-zero power channel state information reference signal (NZP CSI-RS) resource(s), wherein N is a positive integer; and
a processing module, configured to determine whether a terminal selects and feeds back M NZP CSI-RS resource(s) from the N NZP CSI-RS resource(s) in a case that N is greater than 1, wherein M is less than or equal to N.

22. A communication apparatus, comprising:
a sending module, configured to send first information, wherein the first information is used to determine that a channel measurement resource (CMR) comprises N non-zero power channel state information reference signal (NZP CSI-RS) resource(s), wherein N is a positive integer.

23. A communication device, comprising:
a processor; and
a memory for storing instructions executable by the processor;
wherein the processor is configured to: execute the method according to any one of claims 1 to 11.

24. A communication apparatus, comprising:
a processor; and
a memory for storing instructions executable by the processor;
wherein the processor is configured to: execute the method according to any one of claims 12 to 20.

25. A non-transitory computer-readable storage medium, wherein when instructions in the storage medium are executed by a processor of a terminal, the terminal is enabled to perform the method according to any one of claims 1 to 11.

26. A non-transitory computer-readable storage medium, wherein when instructions in the storage medium are executed by a processor of a network device, the network device is enabled to perform the method according to any one of claims 12 to 20.
